# EUROPÄISCHE PATENTSCHRIFT

(11) **EP 1 935 762 B1**
(45) Veröffentlichungstag und Bekanntmachung des Hinweises auf die Patenterteilung: **25.01.2012**
(21) Anmeldenummer: 07024656.6
(22) Anmeldetag: 19.12.2007
(51) Int. Cl.: B62D 27/02, B62D 29/00

(54) **Fahrzeug**
Vehicle
Véhicule

(30) Priorität: 21.12.2006 DE 102006060552
(43) Veröffentlichungstag der Anmeldung: 25.06.2008
(73) Patentinhaber: Bayerische Motoren Werke Aktiengesellschaft, 80809 München (DE)
(72) Erfinder: Kupetz, Bernd, 85247 Schwabhausen (DE); Kirschner, Robert, 82140 Olching (DE); Fassauer, Torsten, 81929 München (DE); Schmitt, Martin, 94327 Bogen (DE); Schönbauer, Karl, 83607 Holzkirchen (DE); Frey, Wilhelm, 85283 Wolnzach (DE); Paul, Wolfgang, 85419 Mauern (DE); Klein, Birgit, 80995 München (DE)

(56) Entgegenhaltungen:
- WO-A-00/35612
- DE-A1- 10 308 423
- GB-A- 371 981
- JP-A- 1 031 986
- US-A- 4 365 443
- US-A- 5 535 841

## Beschreibung

Die Erfindung betrifft ein Fahrzeug mit einer tragenden Struktur, die zumindest teilweise aus einem von Edelstahl unterschiedlichen Metallwerkstoff besteht.

Tragende Strukturen von Fahrzeugen werden in der Regel aus einem konventionellen unedlen Stahlwerkstoff hergestellt, wie beispielsweise DC04 oder H180Y. Dabei sind sowohl die tragende Struktur als auch die Beplankungsteile, wie beispielsweise Front- und Heckklappe, Türen, Seitenwände etc. aus demselben Stahlblechmaterial gefertigt wie die tragende Struktur.

Ebenso sind Fahrzeugkarosserien bekannt, die komplett aus einer Aluminium-legierung oder einer anderen Leichtmetalllegierung hergestellt sind.

Ferner ist es bekannt, Karosserien in Mischbauweise auszuführen, beispielsweise eine konventionelle Karosserie aus Stahl mit zumindest einem Beplankungsteil aus Leichtmetall oder aus einem Kunststoffmaterial auszuführen.

Eine andere, beispielsweise aus der DE 103 03 022 A1 bekannte Karosserie hat eine tragende Struktur, die teilweise in Leichtmetall und teilweise in Stahl ausgeführt ist. Hierbei werden an dem Leichtmetall-Strukturabschnitt Adapter aus Stahlblech angebracht, die in herkömmlicher Weise mit dem Stahlblech-Strukturabschnitt verschweißt werden können. Die Stahlblech-Adapter sind über eine Klebstoffschicht gegenüber dem Leichtmetall-Strukturabschnitt isoliert.

Des Weiteren ist aus der DE 103 08 423 A1 eine Karosserie für ein Fahrzeug bekannt, deren tragende Struktur in Mischbauweise hergestellt ist, wobei die tragende Struktur teilweise aus konventionellen unedleren Stahlsorten und teilweise aus Edelstahl besteht. Hierbei wird der Werkstoff "Edelstahl" bei solchen Strukturbauteilen eingesetzt, die bei einem Crash auf hohem Energieniveau stark verformbar sein sollen, die also primär hinsichtlich der Streckgrenze dimensioniert werden müssen und an die keine sehr hohen Steifigkeitsanforderungen gestellt werden. An den Kontaktstellen der Bauteile aus Edelstahl mit den Bauteilen aus unedleren Stählen besteht die Gefahr einer Kontaktkorrosion. Dieses Problem kann durch Hohlraumkonservierung, Verklebung oder Abdichtung der Mischbaustelle bzw. durch Verzinkung oder Eloxierung des Edelstahls oder durch Einsatz von Adapterblechen behoben werden.

Ferner zeigt die US 4,382,626 ein Fahrzeug, das sich aus einem inneren Körper aus glasfaserverstärktem Kunststoff und einer außenseitigen Beplankung mit Edelstahlblechen zusammensetzt.

Außerdem ist aus der FR 2 833 906 A1 ein Fahrzeug bekannt, das ein Dach aufweist, dessen Dachfläche gegenüber dem Dachrahmen abgesenkt ist, so dass sich auf dem Dach eine vertiefte Transportfläche ergibt. Bei dem Fahrzeug handelt es sich offensichtlich um ein Fahrzeug in konventioneller Bauweise aus einem lackierten Metallblech, wobei in einer Ausführungsform das Dach in Edelstahl ausgeführt sein kann.

Aufgabe der Erfindung ist es, ein grundsätzlich neues Konzept einer Karosserie für ein Fahrzeug in Metall-Mischbauweise aufzuzeigen, wobei die verwendeten Materialien für den Fahrzeugnutzer unmittelbar in Erscheinung treten sollen.

Diese Aufgabe wird durch ein Fahrzeug mit den Merkmalen des Anspruchs 1 gelöst.

Kerngedanke der Erfindung ist hierbei, wenigstens ein bewegliches Beplankungsteil des Fahrzeugs in Edelstahl auszuführen, während die tragende Struktur des Fahrzeugs zumindest teilweise in einem von Edelstahl unterschiedlichen Metallwerkstoff, bevorzugt in einem konventionellen unedlen Stahlwerkstoff oder einem Leichtmetallwerkstoff ausgeführt ist. Dabei wird aus den bekannten Edelstahlsorten eine Güte ausgewählt, die es erlaubt, das Beplankungsteil ohne Beschichtung am Fahrzeug zu verbauen, ohne dass sich die Oberfläche des Beplankungsteils während des Betriebs des Fahrzeugs verändert. Durch die hohe Beständigkeit der betreffenden Edelstahlgüten gegenüber Umwelteinflüssen ist es erfindungsgemäß möglich, auf eine Beschichtung des Beplankungsteils an seiner sichtbaren Außenfläche zu verzichten, das heißt, das Beplankungsteil kann ohne Lackauftrag, ohne Eloxierung und ohne eine andersartige Beschichtung am Fahrzeug eingesetzt werden.

Zwar sind Fahrzeuge bekannt, die komplett aus Edelstahl hergestellt sind, wie beispielsweise ein Porsche 911 aus dem Jahr 1967 oder ein BMW 630 CSI. Diese bekannten Fahrzeuge sind jedoch nicht, wie erfindungsgemäß vorgeschlagen, im Metall-Mischbau hergestellt. Bei den bekannten Fahrzeugen handelt es sich zudem nicht um Serienfahrzeuge, sondern um Studien, da eine Karosserie komplett aus Edelstahl einen wirtschaftlich nicht zu rechtfertigenden Herstellaufwand in einer Serienfertigung bedeutet würde. Bei den bekannten Fahrzeugen ist die Notwendigkeit einer galvanischen Trennung der Beplankungsteile von der restlichen Karosserie nicht gegeben, da ein einheitlicher Werkstoff, nämlich Edelstahl, vorliegt. Somit können die bekannten Fahrzeuge, die aus dem einheitlichen Werkstoff "Edelstahl" bestehen, keinen Hinweis auf die erfindungsgemäße Lösung geben, bei einem Fahrzeug mit einer Tragstruktur aus einem metallischen Werkstoff ausschließlich die Beplankungsteile in Edelstahl auszuführen.

Durch die Erfindung tritt die metallische Oberfläche des Edelstahls sowohl für den Fahrzeugnutzer und als auch seine Umwelt unmittelbar in Erscheinung, ohne Beschichtung an der Außenfläche des Beplankungsteils. Mit wenigen, vergleichsweise großflächigen Beplankungsteilen aus "blankem" Edelstahl wird ein hochwertiger und edler Eindruck des gesamten Fahrzeugs vermittelt.

Gemäß der Erfindung kann auf eine Oberflächenbeschichtung an der Außenseite des Beplankungsteils, in der Regel auf eine Lackierung, verzichtet werden, woraus sich Vorteile aus der Materialeinsparung (kein Lack erforderlich) und gegebenenfalls ein Zeitgewinn bei der Herstellung des Fahrzeugs ergibt.

Während bei Fahrzeugen in Edelstahl-Stahl-Mischbauweise innerhalb der tragenden Fahrzeugstruktur (wie beispielsweise in der DE 103 08 423 A1 beschrieben) ein beträchtlicher Aufwand für die galvanische Trennung innerhalb der Schweißkonstruktion betrieben werden muss, ergibt sich bei erfindungsgemäßen Fahrzeugen durch die einfach zu erreichende galvanische Trennung an den Anbindungsstellen des Beplankungsteils an die tragende Struktur nur ein geringer zusätzlicher Aufwand. Die galvanische Trennung ist erforderlich, um eine elektrochemische Korrosion und/oder eine Delamination zu vermeiden. Die Delamination führt zu Ablösungserscheinungen von Oberflächenbeschichtungen an Bauteilen des Fahrzeugs, wie beispielsweise der Ablösung von Lack.

Der Erfindung liegt unter anderem die Überlegung zugrunde, mit dem Material "Edelstahl" zwar einen teuren Werkstoff für ein Fahrzeug zu verwenden, den Einsatz dieses hochwertigen Werkstoffs aber auf ein Beplankungsteil oder auf wenige Beplankungsteile des Fahrzeugs zu beschränken. Dabei werden vor allem solche Beplankungsteile ausgewählt, die das Erscheinungsbild des Fahrzeugs maßgeblich bestimmen und vom Fahrzeugnutzer und seiner Umwelt besonders gut wahrgenommen werden. Hierdurch entsteht eine Fahrzeugaußenhaut in "zwei Oberflächen", da neben den Beplankungsteilen, die konventionell lackiert sind, Beplankungsteile mit einer blanken Edelstahloberfläche angeordnet sind. Somit verkörpert die Erfindung ein unmittelbar kundenrelevantes Verkaufsmerkmal.

Unter dem Begriff "Fahrzeug" sind vornehmlich Kraftfahrzeuge, insbesondere Personen- und Lastkraftwagen (einschließlich Busse und dergleichen) zu verstehen. Selbstverständlich umfasst der Begriff "Fahrzeug" auch Motorräder, Quads und dergleichen. Bei Motorrädern kann beispielsweise der tragende Rahmen aus einem unedlen Stahl oder einer Aluminiumlegierung bestehen, während mindestens ein Beplankungsteil aus unbeschichtetem Edelstahl hergestellt ist.

Unter den Begriff "Beplankungsteil" fallen in Zusammenhang mit der vorliegenden Erfindung grundsätzlich alle Außenhautbauteile, die nicht Bestandteil der unmittelbar tragenden Fahrzeugstruktur sind. Bei Personenkraftwagen handelt es sich hierbei beispielsweise um vordere oder hintere Klappen, vordere oder hintere Kotflügel, Türen etc. Auch Dachteile oder komplette Dächer sind je nach Art ihrer Einbindung in die tragende Struktur als Beplankungsteile im Sinn der vorliegenden Erfindung zu verstehen. Bei Motorrädern sind die Beplankungsteile beispielsweise ein Tank oder ein Verkleidungsteil.

Selbstverständlich wird in diesem Zusammenhang nicht verkannt, dass auch die oben genannten erfindungsgemäß ausgeführten Beplankungsteile die Steifigkeit der tragenden Struktur geringfügig erhöhen. Die Steifigkeitserhöhung ist hierbei jedoch nur ein Sekundäreffekt. Primär haben Beplankungsteile die Aufgabe, als Anbauteil lösbar an die tragende Struktur angebunden zu werden.

Weiter ist der Begriff "Beplankungsteil" in Zusammenhang mit der vorliegenden Erfindung dahingehend zu verstehen, dass es sich um ein Außenhautbauteil einer nennenswerten Größe handelt, das das Erscheinungsbild des gesamten Fahrzeugs prägt. Demzufolge fallen Embleme, Zierleisten oder Ziergitter, Einfassungen für Scheinwerfer und Blinker etc. nicht unter den Begriff "Beplankungsteil".

Von entscheidender Bedeutung ist die galvanische Trennung zwischen dem "edleren" Beplankungsteil aus Edelstahl und der "unedleren" Restkarosserie des Fahrzeugs aus einem Karbonstahl oder einem Nichteisenwerkstoff, wie insbesondere einer Aluminium-Legierung. Die galvanische Trennung verhindert eine elektrochemische Korrosion der aneinandergrenzenden Bauteile und eine Delamination von Oberflächenbeschichtungen an der restlichen Karosserie oder an solchen Beplankungsteilen, die nicht in "blankem Edelstahl" ausgeführt sind.

Die galvanische Trennung kann in der Praxis meist nicht vollständig erfolgen. Beispielsweise können Befestigungsschrauben nicht immer und vollständig aus isolierendem Material gefertigt werden und müssen deshalb als "Opferelektroden" ausgeführt sein. Außerdem kann bewusst eine elektrische Verbindung vorgesehen sein, um die EMV (elektromagnetische Verträglichkeit) zu gewährleisten. Diese EMV-Verbindung ist bevorzugt als separate elektrische Leitung ausgeführt. Sie weist zum Beispiel eine Opferelektrode auf, die planmäßig ausgetauscht werden muss, wie beispielsweise eine Schraube, die der Befestigung einer EMV-Verbindungsleitung dient.

Zur Realisierung der galvanischen Trennung wird im Kontaktbereich zwischen den unterschiedlichen Materialien eine Isolationsschicht angeordnet. Dies erfolgt beispielsweise bei der Anbindung einer Frontklappe aus Edelstahl an eine Restkarosserie aus Karbonstahl dadurch, dass zwischen einem Scharnierträger aus Karbonstahl und dessen Auflage an der Frontklappe aus Edelstahl eine Trennfolie, Lackschicht oder dergleichen vorgesehen ist. Auch kann der Scharnierträger komplett mit einem isolierenden Material beschichtet sein. Die Verbindungsschrauben zwischen dem Scharnierträger und der Frontklappe können beispielsweise beschichtet und/oder als austauschbare Opferelektrode ausgeführt und/oder mit einer isolierenden Unterlage versehen werden.

Neben isolierenden Materialien oder Maßnahmen können die Bauteile im Übergangsbereich zwischen dem Beplankungsteil aus Edelstahl und der restlichen Karosserie aus einem andersartigen Metallwerkstoff auch mit einer Beschichtung versehen sein, die den Potenzialunterschied herabsetzt und somit die elektrochemische Korrosion auf ein im Praxisbetrieb hinnehmbares Maß reduziert. Als Materialien für eine derartige Beschichtung kommen beispielsweise Zink, Nickel etc. in Frage.

Die oben stehend in Zusammenhang mit dem äußeren Erscheinungsbild angeführte, "nennenswerte Größe" des Beplankungsteils ist auch in Hinblick auf den Potenzialunterschied zwischen dem Beplankungsteil aus Edelstahl und der tragenden Struktur aus einem Karbonstahl oder einem Nichteisenmetallwerkstoff von Bedeutung. Neben der Höhe des Potentialunterschieds ist das Verhältnis der Massen von "unedlem" und "edlem" Material von entscheidender Bedeutung für die elektrochemische Korrosion bzw. die Delamination. Bei vergleichsweise kleinen Bauteilen aus Edelstahl, wie zum Beispiel Schrauben, Emblemen, Zierleisten und dergleichen treten elektrochemische Korrosion und Delamination wegen der dominanten Masse der restlichen Karosserie des Fahrzeugs nicht in nennenswertem Maße auf.

Als ungefährer Anhaltspunkt für die kritische Größe eines Beplankungsteils aus Edelstahl kann bei einem Personenkraftwagen die Größe einer Tankklappe herangezogen werden, in Relation zu einer Restkarosserie aus Karbonstahl oder einem Leichtmetallwerkstoff.

Im Vergleich zu einer tragenden Struktur aus Karbonstahl treten bei einer tragenden Struktur aus einer Leichtmetalllegierung, wie insbesondere einer Aluminium- oder Magnesiumlegierung, wegen des deutlich größeren elektrochemischen Potenzialunterschieds in entsprechend größerem Maß elektrochemische Korrosion und Delamination auf.

Auch bei einer restlichen tragenden Struktur aus einem CFK-Werkstoff (kohlenstofffaserverstärkter Werkstoff) können bei Anbindung von Beplankungsteilen aus Edelstahl elektrochemische Korrosion und/oder Delamination auftreten. Demzufolge gelten die in Zusammenhang mit der vorliegenden Erfindung gemachten Ausführungen zu einer Fahrzeugstruktur aus einem metallischen Werkstoff sinngemäß auch für eine Struktur aus CFK.

Gemäß der Erfindung ist das Beplankungsteil ein beweglich an der tragenden Struktur des Fahrzeugs angeordnetes Bauteil. Bevorzugt sind derartige Beplankungsteile schwenkbeweglich an der Struktur angeordnet. Grundsätzlich ist jedoch auch eine verschiebliche Anordnung möglich. Bei beweglich angeordneten Beplankungsteilen, wie zum Beispiel Klappen oder Türen, erfolgt die galvanische Trennung an den Anbindungsstellen des Beplankungsteils an die tragende Struktur des Fahrzeugs. Die Anbindungsstellen werden beispielsweise von Scharnieren und von Arretierungseinrichtungen (Schlösser, Fanghaken etc.) gebildet.

Gemäß einer bevorzugten Weiterbildung der Erfindung ist bei Personen- oder Lastkraftwagen insbesondere eine Frontklappe oder bei Personenkraftwagen eine Heckklappe in Edelstahl ausgeführt. Im Fall der Frontklappe kann auch der Kühlergrill oder zumindest dessen außen liegende rahmenartige Einfassung in einem Stück mit der Frontklappe hergestellt sein. Selbstverständlich kann der Kühlergrill auch als separates Bauteil in Edelstahl oder in einem anderen Werkstoff ausgeführt sein. Über die Schamiereinrichtungen und das mindestens eine Klappenschloss kann die Front- oder Heckklappe in einfacher Weise galvanisch von der restlichen Karosserie getrennt werden.

Ein besonders ansprechendes äußeres Erscheinungsbild ergibt sich bei einem erfindungsgemäßen Personenkraftwagen mit einer Frontklappe aus Edelstahl, wenn das Fahrzeug mit Kotflügeln versehen ist, die neben ihren vertikalen Abschnitten auch horizontal verlaufende Abschnitte aufweisen. Bei dieser Bauweise erstreckt sich die Frontklappe nicht über die gesamte Breite des Vorderbaus des Fahrzeugs, so dass ein besonders ansprechender Kontrast zwischen den lackierten horizontalen Abschnitten der Kotflügel und der unbeschichteten Oberfläche der Frontklappe entsteht.

Selbstverständlich können jedoch Frontklappe und Kotflügel auch einheitlich aus Edelstahl bestehen. Bei vergleichsweise kleinen Fahrzeugen kann eine einstückige Ausführung von Frontklappe und Kotflügeln aus Edelstahl ein besonders ansprechendes einheitliches und fugenfreies Erscheinungsbild im vorderen Bereich des Fahrzeugs erzeugen.

Um einer Front- oder Heckklappe aus Edelstahl die notwendige Formsteifigkeit über ihrer Flächenerstreckung zu verleihen, ist in einer Ausgestaltung der Erfindung auch das Innenblech der Klappe in Edelstahl ausgeführt. Hierdurch liegt innerhalb der Klappe ein einheitlicher Werkstoff vor, so dass an der Klappe selbst keine Maßnahmen zur Vermeidung von elektrochemischer Korrosion zu treffen sind.

Als optisch besonders auffallendes Beplankungsteil, das in Edelstahl ausgeführt wird, kann nach einer weiteren Ausführungsform der Erfindung auch ein Frontscheibenrahmen oder ein Heckscheibenrahmen ausgeführt sein, der im Sinn eines Beplankungsteils über der darunter liegenden tragenden Struktur angeordnet ist.

Bei einem Fahrzeug mit einer sich entgegen der Fahrtrichtung keilförmig verbreiternden Frontklappe ergibt sich ein besonders markantes Erscheinungsbild, wenn die Frontklappe aus Edelstahl im Bereich des angrenzenden Frontscheibenrahmens aus Edelstahl etwa die Breite des Frontscheibenrahmens hat, so dass an dieser Stelle ein fließender Übergang entsteht.

Es ist grundsätzlich bekannt, für die Herstellung von Bauteilen aus Edelstahl Platinen aus einem gebürsteten Edelstahl zu verwenden, so dass das Halbzeug "Edelstahlplatine" in einem Tiefziehwerkzeug in die gewünschte Form gebracht wird, ohne anschließende weitere Behandlung der sich nach dem Tiefziehen ergebenden Oberfläche.

Bei der vorliegenden Erfindung ist dieses Verfahren wegen Nachteilen bei der erreichbaren Oberflächengüte jedoch nicht zu bevorzugen. Stattdessen werden bevorzugt Platinen mit einer auf der späteren Sichtseite rohen Walzoberfläche in das Tiefziehwerkzeug eingelegt und verformt. Erst am fertigen Bauteil wird dann abschließend eine Oberflächenbehandlung vorgenommen.

Die Beplankungsteile aus Edelstahl können dabei durch eine mechanische Behandlung (Schleifen, Bürsten, Polieren; gegebenenfalls auch Erodieren) und/oder eine chemische Behandlung (z. B. Beizen, Ätzen) behandelt werden, um der außen liegenden Oberfläche die gewünschte Erscheinung zu verleihen. Unter anderem kann durch die genannten Behandlungsmethoden auch die bei Edelstahl auftretende Blendwirkung der Beplankungsteile reduziert werden. Durch diese Mattierung des Beplankungsteils können - je nach Kundenwunsch - unterschiedliche Mattstufen erreicht werden. Außerdem ist es hierdurch möglich, gesetzliche Anforderungen hinsichtlich der Blendwirkung zu erfüllen.

Bevorzugt werden die Beplankungsteile in einem ersten Arbeitsgang geschliffen und in einem zweiten Arbeitsgang gebürstet sowie gegebenenfalls in einem dritten Arbeitsgang poliert. Bei den genannten Arbeitsgängen ist darauf zu achten, dass kein ferritisches Material eingebracht wird, um ein "Rosten" des Beplankungsteils aus Edelstahl zu verhindern. Eine Automatisierung der Arbeitsgänge ist kaum möglich; vielmehr wird das Schleifen und/oder Bürsten und/oder Polieren bevorzugt von Hand ausgeführt, mit gerichteten und strukturierten Bewegungen, wodurch eine kaum sichtbare, aber dennoch wahrnehmbare Oberflächenstruktur entsteht. Das manuelle Oberflächenfinish erzeugt bei jedem Beplankungsteil eine geringfügig unterschiedliche Oberfläche, so dass als Differenzierungsmerkmal eines solchen erfindungsgemäßen Fahrzeugs neben der Individualisierung auch der "Manufakturcharakter" anzuführen ist.

Nach dem oben beschriebenen Aufbringen des "Zierschliffes" wird die Sichtfläche des Beplankungsteils beispielsweise elektrolytisch gebeizt und die Oberfläche damit veredelt, indem die Oberfläche hierdurch ihre letzten rostfähigen Ferrite verliert. Nach Abschluss dieser Behandlung ist die Oberfläche passiviert und kann allen im Regelfall auftretenden chemischen Umwelteinflüssen widerstehen.

Durch entsprechende gerichtete mechanische Behandlung kann die Oberfläche der Beplankungsteile mit Oberflächenmustern (Kreise, Streifen, etc.) versehen werden.

Für die Herstellung von Beplankungsteilen für ein erfindungsgemäßes Fahrzeug eignen sich die nachfolgend beispielhaft genannten oder ähnlich zusammengesetzten Edelstahlgüten: 1.4301, 1.4016, 1.4404, 1.4509 etc.

Selbstverständlich können auch alle anderen geeigneten Edelstahlgüten für ein erfindungsgemäßes Fahrzeug eingesetzt werden.

Zum Schutz der Edelstahloberfläche während der Herstellung des Fahrzeugs und/oder während des Gebrauchs durch den Fahrzeugnutzer kann ein entfernbares Schutzmittel aufgetragen werden. In grundsätzlich bekannter Weise kann die Außenfläche der Beplankungsteile während des Transports des Fahrzeugs vom Herstellungsort zum Händler oder Kunden beispielsweise mit einer entfernbaren Schutzfolie versehen werden.

Ein mögliches Ausführungsbeispiel der Erfindung ist in der Zeichnung dargestellt und wird nachfolgend näher erläutert. Es zeigt:
- Fig. 1: eine perspektivische Darstellung eines erfindungsgemäßen Fahrzeuges mit Beplankungsteilen aus Edelstahl,
- Fig. 2: eine perspektivische Darstellung der Beplankungsteile aus Edelstahl,
- Fig. 3: eine perspektivische Darstellung eines Scharniers für eine Frontklappe eines erfindungsgemäßen Fahrzeugs, mit den für die Montage verwen- deten Zusatzbauteilen, in auseinander gezogener Position der einzelnen Bauteile und
- Fig. 4: eine der Fig. 3 entsprechende Darstellung eines Schließbügels für eine Frontklappe eines erfindungsgemäßen Fahrzeugs.

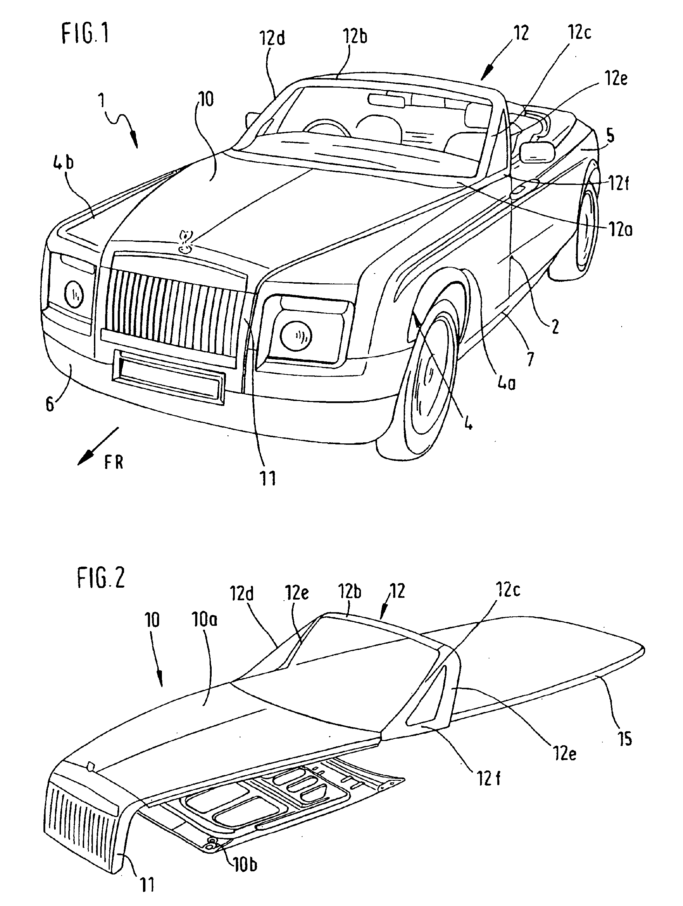

Ein in seiner Gesamtheit mit 1 bezeichnetes Fahrzeug ist gemäß Fig. 1 als Cabriofahrzeug ausgebildet. Das Fahrzeug 1 weist eine tragende Struktur aus einem Karbonstahl- oder Leichtmetallwerkstoff auf. Die Außenhautbauteile des Fahrzeugs 1, nachfolgend als Beplankungsteile bezeichnet, sind teilweise mit einer Lackschicht versehen, während andere Beplankungsteile weder eine Lackschicht noch eine andersartige Beschichtung aufweisen. Die lackierten Beplankungsteile bestehen aus einem konventionellen Karbonstahl- oder Leichtmetallwerkstoff, während die unbeschichteten Beplankungsteile erfindungsgemäß aus Edelstahl bestehen.

Bei den lackierten Beplankungsteilen handelt es sich im vorliegenden Ausführungsbeispiel um eine Tür 2, vordere und hintere Kotflügel 4 bzw. 5, eine Bugschürze 6, Schweller 7 sowie weitere Beplankungsteile. Die vorderen Kotflügel 4 weisen neben ihren im Wesentlichen vertikalen Abschnitten 4a auch horizontal verlaufende Abschnitte 4b auf, die feststehend ausgebildet sind und schräg zur Fahrtrichtung FR verlaufend an eine Frontklappe 10 anschließen.

Die Frontklappe 10 ist erfindungsgemäß aus Edelstahl hergestellt. An die Frontklappe 10, die im Wesentlichen in einer etwa horizontalen Ebene verläuft, schließt sich ein Kühlergrill 11 an, der im Wesentlichen vertikal verläuft. Der Kühlergrill 11 kann einstückig mit der Frontklappe 10 hergestellt sein, bevorzugt ist der Kühlergrill 11 jedoch als separates Bauteil ausgebildet und wird aus Gründen der vereinfachten Herstellung nachträglich mit der Frontklappe 10 verbunden. In der Regel besteht der Kühlergrill 11 selbst wieder aus einer Mehrzahl einzelner Bauteile.

An den fahrtrichtungsabgewandten Endabschnitt der sich keilförmig erweiternden Frontklappe 10 grenzt ein Frontscheibenrahmen 12 an, der ebenfalls aus Edelstahl besteht. Der Frontscheibenrahmen 12 überdeckt als Beplankungsteil die darunter liegende tragende Struktur und setzt sich aus einem unteren und oberen Windlauf 12a bzw. 12b sowie seitlichen Schenkeln 12c bzw. 12d zusammen. Die Abstützung des Frontscheibenrahmens 12 entgegen der Fahrtrichtung FR erfolgt durch einen etwa vertikal verlaufenden hinteren Schenkel 12e, durch den der seitlich außen liegende Abschnitt des Frontscheibenrahmens 12 in der Seitenansicht zusammen mit einer etwa horizontal verlaufenden Basis 12f zu einer Dreiecksstruktur ergänzt wird.

Wie aus Fig. 2 näher hervorgeht, wird die Frontklappe 10 außenseitig von einer glattflächigen, die sichtbare Außenkontur bildenden Außenschale 10a gebildet, die unterseitig von einem Innenblech 10b zu einer steifen Struktur ergänzt wird. Auch das Innenblech 10b ist aus Edelstahl gefertigt.

Die Beplankungsteile 10 bis 12 werden von einer in Brüstungshöhe umlaufenden Zierleiste 15, die ebenfalls aus Edelstahl bestehen kann, ergänzt.

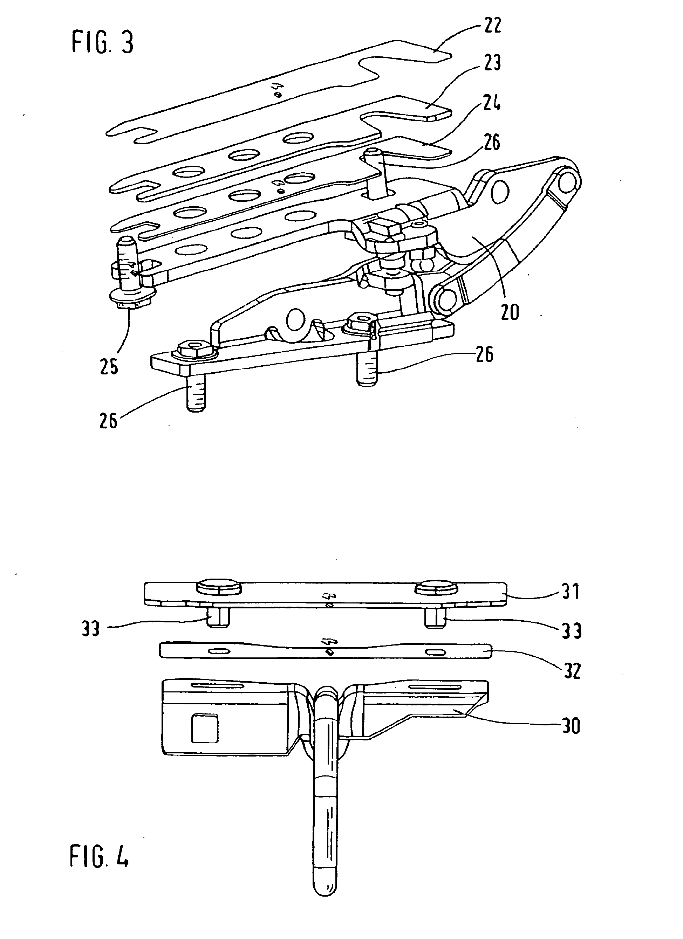

Die Frontklappe 10 wird gemäß den Fig. 3 und 4 durch zwei Scharniere 20 und wenigstens einen Schließbügel 30 an die Karosserie des Fahrzeugs angebunden, die beispielsweise aus einem Aluminiumwerkstoff besteht. Das dem Schließbügel 30 benachbarte Schloss ist nicht dargestellt.

Das Scharnier 20 besteht beispielsweise aus Stahl und ist allseitig mit einer Zink-Nickel-Oberflächenbeschichtung versehen, bedarfsweise zusätzlich mit einer so genannten KTL-Grundierung. Frontklappenseitig sind neben einer Trennunterlage 22 aus einem isolierenden Material Ausgleichsplatten 23 und 24 vorgesehen, die ebenfalls aus Stahl mit einer Zink-Nickel-Oberflächenbeschichtung bestehen können. Die EMV-Anbindung erfolgt beispielsweise über eine Schraube 25 aus Edelstahl, die mit einer isolierenden Trennunterlage unterlegt ist oder über eine Schraube 25 aus Stahl mit einer Zink-Nickel-Oberflächenbeschichtung. Die übrigen Schrauben 26 zur Befestigung des Scharniers 20 an der Frontklappe 10 bzw. an der Karosserie bestehen aus demselben Material wie die Schraube 25. Karosserieseitig kann unter Umständen auf eine isolierende Trennunterlage verzichtet werden, da Korrosions- und Delaminationsvorgänge je nach Materialkombination und Größenverhältnissen vorwiegend an der Frontklappe 10 stattfinden.

Auch der Schließbügel 30 besteht beispielsweise aus Stahl und ist mit einer Zink-Nickel-Oberflächenbeschichtung versehen. Er ist über eine Verstärkung 31 aus Edelstahl (beispielsweise X5CrNi18) und einer Trennunterlage 32 mit der Frontklappe 10 verbunden. Die Befestigung des Schließbügels 30 erfolgt über Muttern aus Edelstahl, die auf Gewindebolzen 33 der Verstärkung 31 aufgeschraubt werden, unter Verwendung einer isolierenden Trennunterlage.

Bei der Anbindung der Scharniere 20 und des Schließbügels 30 wird durch die Verwendung von flächigen Trennunterlagen 22 bzw. 32 sowie Trennunterlagen an den Auflagebereichen der Schraubenköpfe bzw. Muttern eine galvanische Trennung erreicht. Zusätzlich sind die Scharniere 20 und der Schließbügel 30 mit einer Zink-Nickel-Oberflächenbeschichtung versehen, um den Potenzialunterschied zwischen dem Edelstahlmaterial der Frontklappe 10 und dem Aluminiummaterial der Karosserie anzugleichen, falls es doch partiell zu einem direkten Kontakt kommen sollte. Die KTL-Grundierung stellt eine zusätzliche Isolationsschicht dar. Neben der Wirkung als Isolation und Potenzialherabsetzung dienen die Zink-Nickel-Oberflächenbeschichtung und die KTL-Grundierung auch als Korrosionsschutz für die Scharniere 20 und den Schließbügel 30.

Während über die Schraube 25 bewusst eine elektrisch leitende Verbindung erzeugt wird, sind alle übrigen Befestigungsstellen so ausgelegt, dass zumindest näherungsweise eine galvanische Trennung erreicht wird. Demzufolge ist die Schraube 25 gegebenenfalls als "Opferelektrode" auszulegen, die in definierten Zeitabständen ausgetauscht wird.

Die Beplankungsteile 10 bis 12 aus Edelstahl verleihen dem Fahrzeug 1 eine besonders edle Anmutung und erzeugen ein äußerst hochwertiges Fahrzeugexterieur. Erfindungsgemäß trägt hierzu bei, dass die Beplankungsteile 10 bis 12 aus einer Edelstahlgüte gefertigt sind, bei der auf einen Oberflächenschutz verzichtet werden kann. Damit ist eine Lackierung der Beplankungsteile 10 bis 12 nicht erforderlich, auch nicht in Form einer Klarlackschicht.

Beispielsweise durch mechanische Verfahren, insbesondere Bürsten, Schleifen und Polieren, kann der Oberfläche der Beplankungsteile 10 bis 12 je nach Anforderung und/oder Kundenwunsch eine unterschiedliche Anmutung gegeben werden. Damit kann die Oberfläche der Beplankungsteile 10 bis 12 ab Werk oder nachträglich individuell gestaltet werden. Auch eine nachträgliche Beschichtung, vornehmlich durch Lackauftrag, ist möglich, wenn der Fahrzeugnutzer das metallische Erscheinungsbild nicht mehr haben will.

Als weiterer Vorteil ist zu nennen, dass bei einem erfindungsgemäßen Fahrzeug mit wenigstens einem Beplankungsteil aus Edelstahl dieses Beplankungsteil je nach Kundenwunsch bereits bei der Herstellung des Fahrzeugs, zusammen mit der restlichen Oberfläche des Fahrzeugs, mit einer Oberflächenbeschichtung, wie zum Beispiel einem Lack, versehen werden kann. Damit ist zwar das erfindungsgemäß erreichte äußere Erscheinungsbild nicht mehr gegeben. Es ist jedoch möglich, die Fahrzeuge bei der Herstellung einheitlich aufzubauen, ohne die Notwendigkeit, für lackierte Beplankungsteile ein anderes Material vorsehen zu müssen, da durch die Materialvarianten ein erhöhter Aufwand entstehen würde.

Für diesen oben stehend angeführten Fall einer lackierten Frontklappe 10 ist die galvanische Trennung, wie anhand der Fig. 3 und 4 beschrieben, von zusätzlicher Bedeutung, da es bei einem direkten Kontakt der unterschiedlichen Metalle zu Delaminationsvorgängen an der Oberfläche der Frontklappe 10 kommen könnte, durch die sich die Lackschicht partiell oder großflächig ablösen würde.

Zusammenfassend lässt sich die Erfindung wie folgt beschreiben: Ein erfindungsgemäßes Fahrzeug 1 weist eine tragende Struktur auf, die zumindest teilweise aus einem von Edelstahl unterschiedlichen Metallwerkstoff besteht. Wenigstens ein Beplankungsteil 10 bis 12 des Fahrzeugs 1 besteht aus Edelstahl. Das Beplankungsteil 10 bis 12 weist keine Oberflächenbeschichtung auf. Das Beplankungsteil 10 bis 12 ist galvanisch von der Karosserie des Fahrzeugs 1 getrennt.

## Patentansprüche

1. Fahrzeug mit einer tragenden Struktur, die zumindest teilweise aus einem von Edelstahl unterschiedlichen Metallwerkstoff besteht, mit einem Beplankungsteil (10 bis 12) oder wenigen Beplankungsteilen (10 bis 12) aus Edelstahl mit einer unbeschichteten Oberfläche, das bzw. die neben Beplankungsteilen (2; 4 bis 7), die konventionell lackiert sind und aus einem konventionellen Karbonstahl- oder Leichtmetallwerkstoff bestehen, angeordnet ist bzw. sind,
**dadurch gekennzeichnet, dass** das Beplankungsteil (10) oder die wenigen Beplankungsteile (10) das Erscheinungsbild des gesamten Fahrzeugs maßgeblich bestimmt bzw. bestimmen, wobei der Edelstahl eine solche Güte aufweist, dass sich die Oberfläche des Beplankungsteils (10) bzw. der Beplankungsteile (10) aus Edelstahl während des Betriebs des Fahrzeugs (1) nicht verändert, wobei das Beplankungsteil (10) bzw. die Beplankungsteile (10) beweglich am Fahrzeug (1) angeordnet ist bzw. sind und das Beplankungsteil (10) bzw. die Beplankungsteile (10) von der tragenden Struktur aus Metallwerkstoff galvanisch getrennt ist bzw. sind.

2. Fahrzeug nach Anspruch 1,
**dadurch gekennzeichnet, dass** das Fahrzeug (1) ein Personen- oder Lastkraftwagen ist und das Beplankungsteil eine Frontklappe (10) ist.

3. Fahrzeug nach Anspruch 2,
**dadurch gekennzeichnet, dass** die Frontklappe (10) ein Innenblech (10a) aufweist, das ebenfalls aus Edelstahl besteht.

4. Fahrzeug nach Anspruch 2 oder 3,
**dadurch gekennzeichnet, dass** sich an die Frontklappe (10) ein Kühlergrill (11) aus Edelstahl anschließt:

5. Fahrzeug nach einem der vorgenannten Ansprüche,
**dadurch gekennzeichnet, dass** ein Scheibenrahmen (12) aus Edelstahl vorgesehen ist.

6. Fahrzeug nach einem der vorgenannten Ansprüche,
**dadurch gekennzeichnet, dass** die Oberfläche des Beplankungsteils (10) durch ein mechanisches und/oder chemisches Verfahren behandelt ist.

7. Fahrzeug nach Anspruch 6,
**dadurch gekennzeichnet, dass** die Oberfläche durch ein Schleifverfahren und wahlweise ein nachfolgendes Bürstverfahren und wahlweise ein nachfolgendes Polierverfahren behandelt ist.

8. Fahrzeug nach Anspruch 7,
**dadurch gekennzeichnet, dass** das Schleifen und/oder Bürsten und/oder Polieren manuell erfolgt.

## Claims

1. A vehicle with a supporting structure, which comprises at least partially of a metal material that is different from high-grade steel, with a cladding part (10 to 12) or a few cladding parts (10 to 12) made of high-grade steel with an uncoated surface, which is or are arranged next to cladding parts (2; 4 to 7), which are conventionally painted and comprise of a conventional carbon steel or light metal material,
**characterised in that** the cladding part (10) or the few cladding parts (10) decisively determines or determine the appearance of the entire vehicle, the high-grade steel having a quality such that the surface of the cladding part (10) or the cladding parts (10) made of high-grade steel does not change during operation of the vehicle (1), the cladding part (10) or the cladding parts (10) being movably arranged on the vehicle (1) and the cladding part (10) or the cladding parts (10) being galvanically isolated from the supporting structure made of metal material.

2. A vehicle according to claim 1,
**characterised in that** the vehicle (1) is a passenger car or lorry and the cladding part is a front bonnet (10).

3. A vehicle according to claim 2,
**characterised in that** the front bonnet (10) has an inner panel (10a), which also consists of high-grade steel.

4. A vehicle according to claim 2 or claim 3,
**characterised in that** a radiator grille (11) made of high-grade steel adjoins the front bonnet (10).

5. A vehicle according to any one of the preceding claims,
**characterised in that** a window frame (12) made of high-grade steel is provided.

6. A vehicle according to any one of the preceding claims,
**characterised in that** the surface of the cladding part (10) is treated by a mechanical and/or chemical method.

7. A vehicle according to claim 6,
**characterised in that** the surface is treated by a grinding method and optionally a subsequent brushing method and optionally a subsequent polishing method.

8. A vehicle according to claim 7,
**characterised in that** the grinding and/or brushing and/or polishing takes place manually.

## Revendications

1. Véhicule équipé d'une structure portante au moins en partie en une matière métallique autre que de l'acier inoxydable, ayant :
- une pièce d'habillage (10-12) ou peu de pièces d'habillage (10-12) en acier inoxydable avec une surface non revêtue, qui sont placées à côté de la ou des pièces d'habillage (2 ; 4-7) qui sont traditionnellement vernies et sont en un acier au carbone ou un métal léger, classique, véhicule **caractérisé en ce que**
la pièce d'habillage (10) ou les quelques pièces d'habillage (10) définissent ou déterminent de manière décisive l'aspect de l'ensemble du véhicule,
* l'acier inoxydable ayant une qualité telle que la surface de la pièce d'habillage (10) ou des pièces d'habillage (10) en acier inoxydable, ne change pas pendant tout le temps d'utilisation du véhicule (1),
* la pièce d'habillage (10) ou les pièces d'habillage (10) étant installées de manière mobile sur le véhicule (1) et la pièce d'habillage (10) ou les pièces d'habillage (10) sont séparées galvaniquement de la structure de support en métal.

2. Véhicule selon la revendication 1,
**caractérisé en ce que**
le véhicule (1) est un véhicule de tourisme ou un véhicule de transport de charge et la pièce d'habillage est le capot (10).

3. Véhicule selon la revendication 2,
**caractérisé en ce que**
le capot (10) comporte une tôle intérieure (10a) également en acier inoxydable.

4. Véhicule selon la revendication 2 ou 3,
**caractérisé en ce qu'**
une grille de radiateur (11) en acier inoxydable fait suite au volet frontal (10).

5. Véhicule selon l'une des revendications précédentes,
**caractérisé par**
un châssis de vitre (12) en acier inoxydable.

6. Véhicule selon l'une des revendications précédentes,
**caractérisé en ce que**
la surface de la pièce d'habillage (10) est traitée par un procédé mécanique et/ ou chimique.

7. Véhicule selon la revendication 6,
**caractérisé en ce que**
la surface est traitée par un procédé de ponçage et au choix par un procédé de balayage successif et enfin par un procédé de polissage venant en aval.

8. Véhicule selon la revendication 7,
**caractérisé en ce que**
le ponçage et/ou le brossage et/ou le polissage se font manuellement.
